Europäisches Patentamt

(19) European Patent Office

Office européen des brevets

(11) Numéro de publication: **0 055 181**
**B1**

(12) **FASCICULE DE BREVET EUROPEEN**

(45) Date de publication du fascicule du brevet:
**27.08.86**

(21) Numéro de dépôt: **81402029.3**

(22) Date de dépôt: **18.12.81**

(51) Int. Cl.⁴: **F 16 K 3/08,** F 16 K 47/08,
F 16 K 47/02

(54) Disque percé d'au moins une ouverture, et robinet comportant un tel disque.

(30) Priorité: **23.12.80 FR 8027323**

(43) Date de publication de la demande:
**30.06.82 Bulletin 82/26**

(45) Mention de la délivrance du brevet:
**27.08.86 Bulletin 86/35**

(84) Etats contractants désignés:
**AT BE CH DE GB IT LI LU NL SE**

(56) Documents cités:
**EP - A - 0 003 459**
**EP - A - 0 021 029**
**EP - A - 0 033 428**
**DE - A - 2 923 074**
**FR - A - 2 410 776**
**FR - A - 2 434 979**
**FR - A - 2 439 345**
**US - A - 2 165 639**

(73) Titulaire: **C.I.C.E. S.A., 67 rue Desnouettes,**
**F-75015 Paris (FR)**
Titulaire: **ETABLISSEMENTS TRUBERT, 194, Avenue du**
**Général Leclerc, F-78220 Viroflay (FR)**

(72) Inventeur: **Trubert, Denis, THOMSON-CSF SCPI 173, bld**
**Haussmann, F-75360 Paris Cedex 08 (FR)**
Inventeur: **Caria, Bernard, THOMSON-CSF SCPI 173, bld**
**Haussmann, F-75360 Paris Cedex 08 (FR)**

(74) Mandataire: **Rinuy, Santarelli, 14, avenue de la Grande**
**Armée, F-75017 Paris (FR)**

ACTORUM AG

## Description

La présente invention concerne un disque fixe pour robinet à deux disques superposés réglant le débit et à faible émission sonore, en particulier pendant l'action d'ouverture et de fermeture. On connaît déjà par ex. du EP-A-3.459 un tel disque fixe correspondant aux préambules des revendications indépendantes 1 et 3.

Les robinets du type le plus répandu, font appel à un siège fixe muni d'ouvertures circulaires pour le passage de l'eau, obturable par un clapet mobile de caoutchouc pouvant se déplacer perpendiculairement au siège. La commande du clapet est en général progressive, par mise en œuvre d'une vis, dont la rotation dans l'embase du robinet provoque par une de ses extrémités, la translation du clapet, l'autre extrémité constituant la tige ou «queue de manœuvre». Cependant, cette structure possède plusieurs inconvénients, liés d'une part, à l'importance du déplacement nécessaire du clapet, pour passer de l'arrêt au débit maximal, rendant imprécis la fermeture, et d'autre part à l'évolution dans le temps, liée notamment à l'écrasement progressif du clapet en particulier si le liquide distribué par le robinet est chaud.

On a plus récemment proposé des dispositifs de but identique, mettant en œuvre comme siège et clapet, deux disques, le plus souvent en matière céramique munis d'ouvertures et disposés en superposition, leur rotation mettant ces ouvertures soit en coïncidence, ce qui correspond au passage du liquide, soit en opposition, ce qui correspond à la fermeture du robinet. Ces mécanismes sont plus satisfaisants à cause de la position géométrique de leur fermeture, la stabilité de leur débit, pour une ouverture donnée, quelque soit la température du liquide contrôlé, et enfin à cause de leur fiabilité.

Une vanne de ce type est également décrite dans le brevet US-A-2 165 639. Cette vanne, pour la distribution d'essence, peut fonctionner dans les deux directions. Afin d'éviter les turbulences du liquide lors de l'ouverture complète de la vanne, il est suggéré dans ce brevet, d'élargir l'alésage interne de la vanne au niveau des disques, de manière à ce que la surface des ouvertures soit au moins aussi large que la section du tube d'arrivée de liquide. Simultanément, il est nécessaire de profiler les surfaces supérieures du disque de fermeture.

Un premier inconvénient d'une telle vanne est que sa structure ne permet pas de réduire le bruit créé à l'ouverture de celle-ci. La solution préconisée, valable dans les deux sens de circulation du liquide, présente en outre le gros inconvénient d'un doublement de la surface de la vanne au niveau des disques, solution inacceptable pour les robinets de type quart-de-tour.

Le FR-A-2 410 776 décrit un mitigeur eau chaude-eau froide dans lequel un plateau fixe reçoit le liquide de canalisations d'arrivée de diamètres supérieurs au diamètre des ouvertures traversant ce plateau fixe. Afin de réduire le bruit à l'interface, un joint de forme «en entonnoir» est placé entre les canalisations d'arrivée et le disque fixe. L'enseignement de ce brevet ne permet pas de résoudre le problème posé par les bruits engendrés aux faibles ouvertures des robinets de type quart-de-tour.

La demande européenne antérieure EP-A-33 428, au nom des mêmes Demanderesses que la présente et comprise dans l'état de la technique au titre de l'art. 54(3) CBE, décrit un robinet de type quart-de-tour comportant deux disques céramiques. Le disque d'entrée, généralement fixe, a la forme d'un dièdre saillant, permettant la réduction du bruit, en particulier aux faibles ouvertures.

L'invention, telle qu'elle est caractérisée dans les revendications 1 et 3, résout le problème de réduction de bruit, en particulier pendant l'action d'ouverture et de fermeture.

On a en effet constaté qu'il était parfois difficile de réaliser les disques selon l'invention en particulier lorsque ceux-ci sont constitués d'un matériau en céramique frittée. Ces deux parties se raccordent en général suivant un plan parallèle à la face plane du disque. Cette surface de raccordement peut cependant présenter un état de surface rugueux ou même «vallonné» pour faciliter le positionnement des deux parties avant assemblage et améliorer également l'adhérence après collage.

Afin de résoudre plus aisément le problème posé, une variante de réalisation du disque selon l'invention prévoit que ledit disque est constitué en deux parties, l'une étant de préférence un disque plat en matériau céramique, l'autre étant généralement en matière plastique moulée. Cette matière plastique peut être rigide ou souple, ce qui permet, dans ce dernier cas, d'éviter d'utiliser des joints dans les robinets faisant usage des disques tels que décrits ci-dessus. Ces deux parties seront généralement assemblées l'une avec l'autre à l'aide d'un adhésif, adapté à l'usage du robinet tel que les colles époxy, polyuréthanes, isocyanates, mono ou bi-composants.

D'une façon générale, et pour obtenir un usage prolongé du disque de l'invention dans les robinets tels que décrits ci-dessus, lesdits disques seront généralement en matériaux céramiques, connus pour leur dureté exceptionnelle, mais aisément rectifiables, ce qui permet de leur conférer des faces planes ayant un coefficient de frottement faible. En effet, de tels disques sont amenés à coopérer avec un second disque, ainsi que cela a été expliqué ci-dessus. Ce second disque est également en un matériau très dur et de préférence en un matériau céramique. Toutefois, la fabrication du disque selon l'invention, compte tenu de sa forme particulière est une opération relativement longue et difficile. C'est pourquoi, selon cette autre variante de l'invention, on peut réaliser ledit disque en deux parties: l'une, en matière dure telle que la céramique, ayant la forme d'un disque plat percé de n ouvertures en secteurs, et l'autre ayant une face plane et une face non plane. Avantageusement, cette seconde partie la plus délicate à réaliser, sera faite en un matériau moulable. En effet, cette seconde partie ne subit aucune contrainte ni frottement lorsque le disque est monté dans un robinet. Aussi, elle peut être réalisée dans un matériau beaucoup moins dur et en particulier en matière plastique moulable telle que les polyoléfines, les homo ou co-polymères de polychlorure de vinyle, polystyrène, polyamide, polycarbonate, polyuréthane, polyméthacrylate de méthyle, polyester, etc..., ainsi qu'en caoutchouc naturel ou synthétique, lesdits produits étant choisis bien entendu, en fonction de l'utilisation du robinet, c'est-à-dire la nature et la température maximale du liquide à véhiculer. Les deux parties du disque selon l'invention seront assemblées entre elles à l'aide d'un adhésif, tel que les adhésifs à base de polyuréthane du type mono ou bi-composant, les ouvertures en secteurs correspondantes des deux parties étant mises en regard l'une et l'autre.

D'autres modes particuliers de réalisation du disque selon l'invention ressortent des revendications dépendantes.

L'invention concerne également des robinets à liquide conformes à l'une des revendications 16 à 20.

Pour les deux variantes de grillage mentionnées dans les revendications ci-dessus, il est important que l'un des plans inclinés ou surface latérale du cône soit situé à proximité du bord de l'ouverture correspondant à la fermeture du robinet.

D'une manière générale, on entend par grillage toute plaquette percée d'une pluralité de trous, disposée devant la face de sortie du second disque, généralement mobile. Cette plaquette, en forme de tamis métallique, ou de grillage à mailles serrées, a pour but de fractionner et de briser les éventuels tourbillons hydro-dynamiques, créés dans la canalisation d'arrivée, en amont du robinet. De tels tamis sont déjà utilisés dans la pratique, mais la présente invention prévoit de conférer à leur surface la forme de deux cônes inclinés, en sens inverse, et disposés côte à côte, de telle sorte que le sommet de chaque cône incliné, présent dans chacune des ouvertures, corresponde au sens de la fermeture du robinet: aux petites ouvertures, en effet, la vitesse est alors maximale, et la présence d'un grillage anti-tourbillonnaire au voisinage immédiat de l'ouverture a été constatée comme particulièrement efficace. On peut encore améliorer le fonctionnement du robinet selon l'invention en disposant une pluralité de grillages anti-tourbillonnaires, de même pas ou de pas différent, dont les ouvertures peuvent être décalées les unes par rapport aux autres.

L'invention sera mieux comprise à l'aide de les description ci-après, en s'appuyant sur les figures annexées ou:

— la figure 1 représente un robinet quart de tour suivant l'art connu,

— la figure 2 représente une variante, en coupe partielle, d'une partie d'un robinet quart de tour suivant l'art connu,

— la figure 3 représente un disque du robinet quart de tour selon EP-A-33 428,

— la figure 4 représente une variante d'un disque selon EP-A-33 428,

— la figure 5 représente une variante selon l'invention de la figure 3, dans laquelle le disque est réalisé en deux parties,

— la figure 6 représente une variante selon l'invention de la figure 4, dans laquelle le disque est réalisé en deux parties,

— la figure 7 représente une variante du disque selon l'invention avec une arête plane et une surface latérale inclinée concave,

— la figure 8 représente une coupe suivant l'axe AA de la figure 7,

— la figure 9 représente une variante du disque selon l'invention avec une surface d'arête convexe et une surface latérale inclinée concave,

— la figure 10, une variante de réalisation du disque selon l'invention comportant trois secteurs et des portions d'arêtes planes,

— la figure 11, une autre variante de réalisation du disque selon l'invention avec une surface d'arête convexe prolongée par une surface inclinée concave,

— la figure 12, une variante de réalisation du disque de la figure 11 avec une génératrice de la surface d'arête parallèle diamétrale prolongée par une surface latérale inclinée convexe, puis concave, puis à nouveau convexe, puis concave, puis à nouveau convexe,

— la figure 13 qui comporte deux vues A et B, une variante de réalisation du disque selon la figure 12, dans laquelle la dernière surface convexe est reliée à la face plane du disque par une surface plane verticale,

— la figure 14 représente un disque selon l'invention muni d'un seul secteur,

— la figure 15 représente, schématiquement suivant deux vues (A et B), deux positions des deux disques fixe et mobile du robinet selon l'invention, équipé d'un cône grillagé,

— la figure 16 représente un robinet quart de tour selon l'invention, équipé d'une tige de commande à extrémités internes en forme de cônes, selon EP-A-33 428.

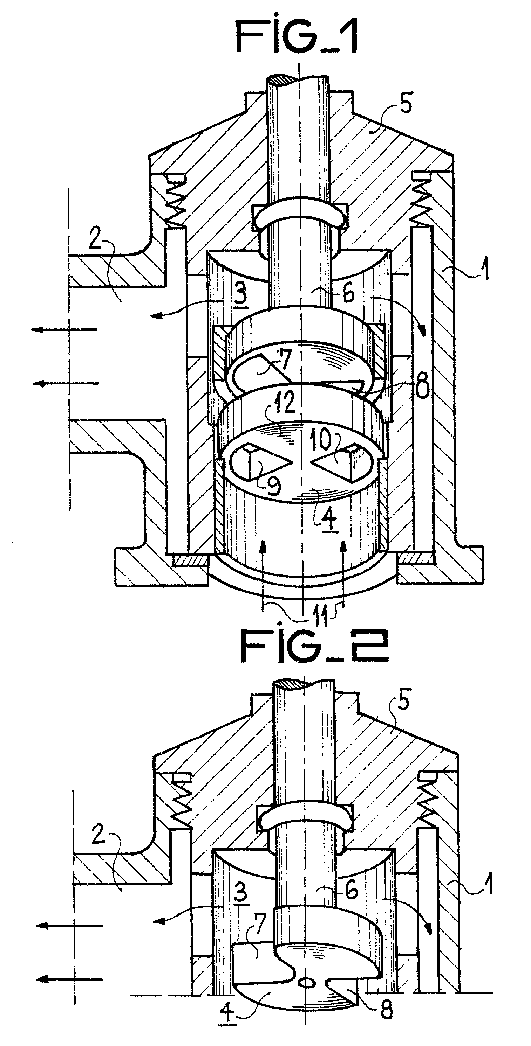

La figure 1 représente un robinet du type quart de tour selon l'art connu. Il est constitué d'un corps 1, de forme généralement cylindrique, sur la surface latérale duquel une sortie d'eau 2 est prévue. Le dispositif de réglage de débit de l'eau est constitué de deux disques 3 et 4, en forme de cylindre de faible hauteur, représentés écartés sur la figure 1 pour une meilleure compréhension, mais qui sont normalement appliqués l'un sur l'autre. Le disque 4 est fixe, et solidaire d'un support 5, et le disque 3 est tournant, sous l'action de la tige de commande 6. Les disques portent chacun deux ouvertures en forme de secteur, d'une part, 7 et 8, et d'autre part, 9 et 10. Cette rotation ne peut dépasser un angle de 90°, grâce à un moyen non représenté, ce qui assure soit la mise en coïncidence des ouvertures, soit leur mise en quadrature, avec toutes les positions intermédiaires.

Lorsque l'eau est introduite, suivant les flèches 11, à la face d'entrée 12 du disque fixe, son débit est ainsi ajusté depuis l'arrêt jusqu'à la valeur maximale liée à la dimension des ouvertures, alors mises en coïncidence. Cependant, ce type de robinet, s'il assure un réglage correct du débit, émet un bruit de fonctionnement excessif pour les vitesses du fluide élevées, ainsi qu'on l'a indiqué en détail plus haut, en particulier lorsque les ouvertures en secteurs sont presque à la fermeture, réalisant des étranglements de la veine fluide, générateurs de tourbillons favorisant le bruit.

La figure 2 représente, en coupe partielle, une partie d'un robinet quart de tour suivant l'art connu, mettant en œuvre un disque mobile de forme dite «papillon». Le disque 4 ne comporte plus de parois continues sur sa surface latérale, comme dans le cas de la figure 1, et les ouvertures 7 et 8 sont ainsi ouvertes latéralement, ce qui améliore l'écoulement de l'eau.

Dans les deux variantes de réalisation de disques actuellement connus, on remarquera que ceux-ci comportent deux faces planes, parallèles.

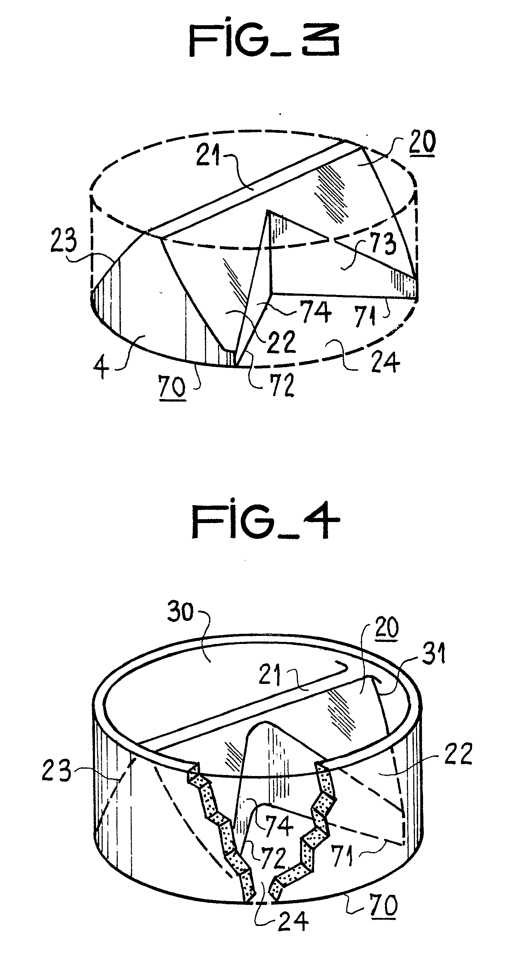

La figure 3 représente un disque fixe pour robinet quart de tour selon EP-A-33 428. Il est représenté en position inversée pour une meilleure compréhension.

Il est caractérisé par le remplacement de la face plane d'entrée 12 du disque connu de la figure 1, par une face 20 en forme de dièdre, avec une arête 21 parallèle à la face plane 70 et deux plans 22 et 23. Chaque ouverture en secteur 24 a son axe de symétrie contenu dans le plan perpendiculaire à l'arête 21 du dièdre. On remarque également sur cette figure que le secteur 24 est délimité par deux arêtes 71 et 72 qui sont l'intersection de la face plane 70 et des plans 73 et 74 perpendiculaires à celle-ci et définissant un secteur d'ouverture à 90°.

Après mise en place dans le support fixe 5 du robinet de la figure 1, et en coopération avec les parois cylindriques internes de ce support, les plans tels que 22 du disque fixe réalisent une réduction progressive et régulière de la section libre offerte à l'eau, et produisent un effet de guidage hydro-dynamique de la veine fluide qui la maintient en régime laminaire, même pour les petites ouvertures, en ce comportant comme des déflecteurs d'entrée. Le bruit produit par le robinet ainsi équipé est alors réduit dans de grandes proportions, l'apparition des tourbillons étant rejetée vers un régime de débits se situant très au-dessus des valeurs usuelles.

La figure 4 représente une variante de réalisation du disque fixe selon EP-A-33 428. Suivant cette variante, un manchon cylindrique extérieur 30 est ajouté sur la surface latérale du disque 4. Ce manchon, réalisé en un matériau unique et continu avec celui du disque, joue le rôle de la paroi cylindrique interne du support de la figure 1 pour la réalisation de l'effet hydro-dynamique recherché. Il permet de simplifier la fixation du disque dans ce cylindre, qui ne joue plus alors qu'un rôle de support mécanique. Ce manchon 30 peut cependant ainsi que décrit ci-dessus, être en un matériau différent, rapporté autour du disque. De plus, la zone de raccordement 31 entre un des plans du dièdre et le cylindre peut être mise en forme avec précision, soit suivant un profil en gouttière, soit suivant un dièdre rentrant améliorant l'écoulement.

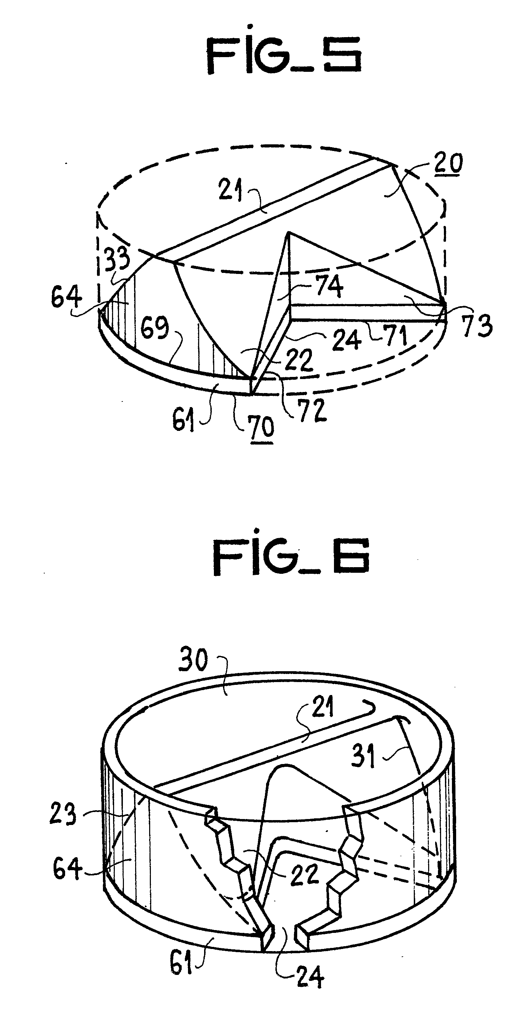

Sur la figure 5, qui représente une variante selon l'invention du disque représenté sur la figure 3, mais en deux parties, les mêmes éléments que ceux de la figure 3 portent les mêmes références. Sur cette figure, la partie inférieure du disque est constituée par un disque plat 61, percé d'ouvertures en forme de secteurs, telles que 24. La partie supérieure 64 de ce disque est tout fait semblable au disque représenté sur la figure 3. La surface de séparation 69 des deux parties du disque est ici parallèle à l'arête 21 du dièdre.

Sur la figure 6, qui représente une variante selon l'invention de la figure 4 dans laquelle le disque est en deux parties, les mêmes éléments que ceux de cette figure portent les mêmes références. Le disque inférieur 61 possède la même structure que celle du disque correspondant de la figure 5, à la différence que les secteurs tels que 24 sont des secteurs fermés.

Une telle structure en deux parties, telle que décrite sur les figures 5 et 6 est particulièrement avantageuse à réaliser, étant donné que la partie inférieure 61 du disque de forme simple peut être réalisée en matériau céramique sans difficulté, la partie supérieure 64 dudit disque, de forme beaucoup plus complexe, pouvant alors être moulée à l'aide d'un matériau thermoplastique ou en caoutchouc. L'assemblage des deux parties se fait sans aucune difficulté, à l'aide d'un adhésif résistant aux températures élevées, tel qu'une colle polyurétane mono ou bi-composant, les secteurs tels que 24 des deux parties du disque étant mises en regard l'une de l'autre.

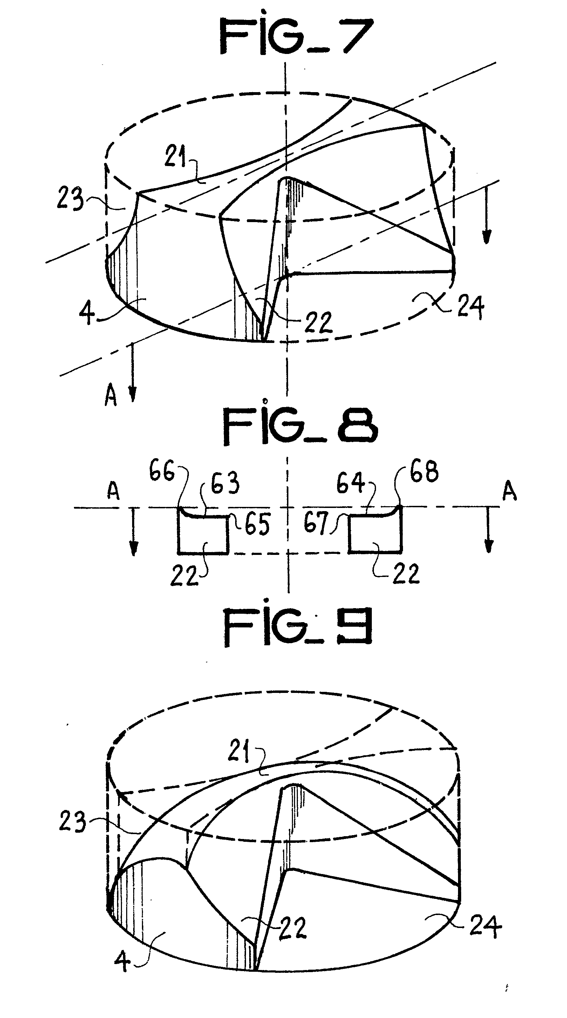

La figure 7 représente une variante du disque selon l'invention avec une arête plane et une surface latérale inclinée concave, dans laquelle les plans 22 et 23 constituant le dièdre se coupant selon l'arête 21, sont des plans curvilignes. Ceci donne une forme particulière à l'arête 21, dont le contour ressemble approximativement au contour extérieur d'une lettre X. Une telle structure présente l'avantage d'une plus grande solidité de l'arête.

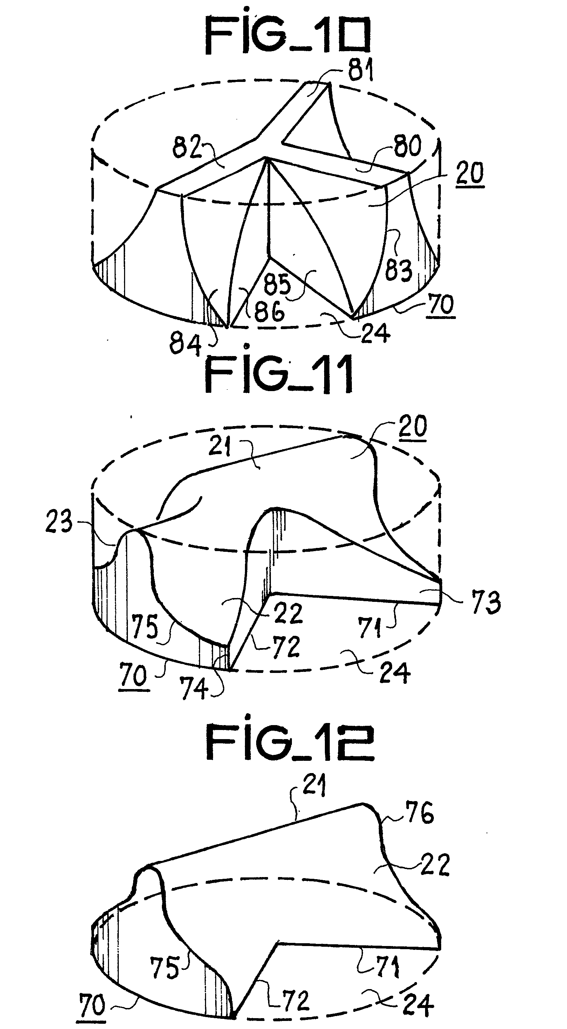

Sur la figure 8, on a représenté une coupe selon le plan AA de la figure 7. Sur cette coupe sont représentées deux portions du plan 22, limitées respectivement en 66, 65 et 67, 68. Ce plan a le profil d'une gorge, respectivement 63, 64, dont une extrémité 65, 67 est beaucoup plus basse que l'autre 66, 68. Un tel profil est particulièrement bien adapté à la conservation du régime d'écoulement laminaire de la plupart des liquides et en particulier de l'eau.

Bien que la coupe de la figure 8 soit celle du disque représenté sur la figure 7, il est bien entendu que les disques représentés sur les autres figures peuvent également présenter le même profil en forme de gorge.

Sur la figure 9 est représentée une variante du disque selon l'invention, avec une surface d'arête convexe et une surface latérale inclinée concave,

variante dans laquelle l'arête 21 n'est pas parallèle à la face plane dudit disque. Cette arête, toutefois, est cependant comme dans le cas des autres figures, généralement sensiblement symétrique par rapport à un plan perpendiculaire à la face plane dudit disque.

Une structure telle que représentée sur la figure 9 présente l'avantage d'une plus grande compacité.

Il est à noter que l'arête peut également être orientée de façon concave, contrairement à l'illustration de la figure 9 où elle est orientée de façon convexe.

La figure 10 représente une variante de réalisation du disque selon l'invention, dans laquelle ledit disque comporte 3 secteurs, correspondant à un angle de 60°, entre les positions ouverte et fermée. L'arête est composée de portions d'arêtes planes.

Sur cette figure, les mêmes éléments que ceux des figures précédentes portent les mêmes références. La face supérieure du disque comporte 3 arêtes 80, 81, 82 qui se coupent sensiblement sur l'axe du disque. Chaque secteur est formé de surfaces curvilignes 83 et 84 se prolongeant par des surfaces sensiblement verticales 85 et 86.

La figure 11 représente une autre variante du disque selon l'invention, sur laquelle les mêmes éléments que précédemment portent les mêmes références. Le dièdre a été remplacé ici par un ensemble de 2 surfaces curvilignes 22 et 23 qui se rejoignent suivant une surface convexe 21. Dans cet exemple de réalisation de l'invention, la face du disque sur laquelle arrive le liquide ne présente alors aucune partie saillante mais des parties arrondies, ce qui permet d'éviter mieux encore les phénomènes de turbulence.

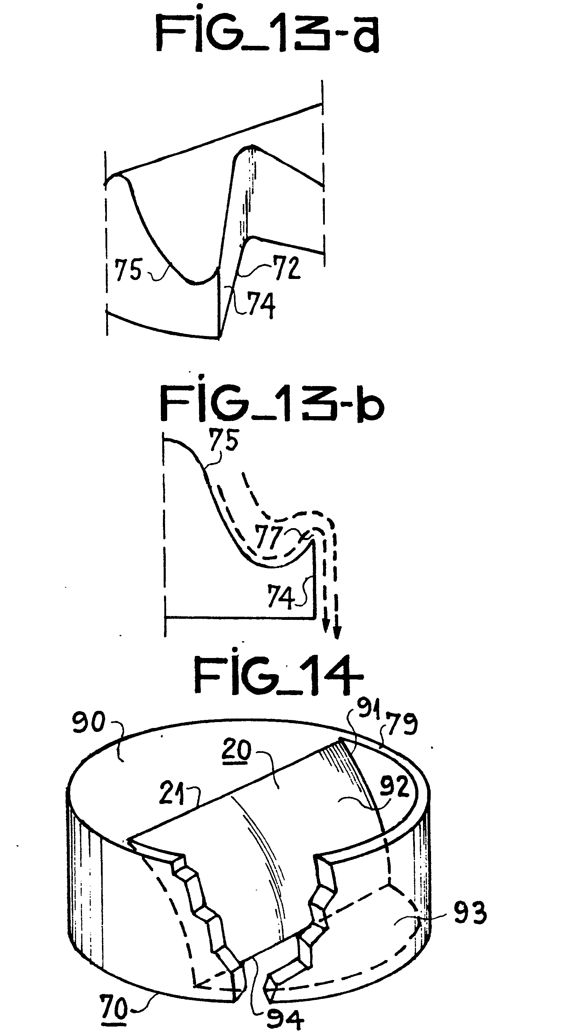

La figure 12 représente une autre variante de réalisation du disque selon l'invention. Dans cette variante, toutes les arêtes vives de la face supérieure du disque ont été éliminées, comme dans le cas de la figure 11. Toutefois, les parties planes 73 et 74 de la figure 11 ont été éliminées et remplacées par une surface continue convexe se terminant sur les arêtes 71 et 72 du secteur 24. Ainsi, sur cette figure, l'arête latérale 75 du disque (ainsi que l'arête opposée 76) forme une ligne continue présentant successivement une partie convexe au départ de l'arête 21 du dièdre puis une partie concave et enfin une autre partie convexe à proximité de l'arête 72. Cette disposition est symétrique par rapport au plan perpendiculaire à la face plane 70 du disque et contenant l'arête 21.

Sur la figure 13 est représentée partiellement une autre variante de réalisation du disque selon l'invention. Dans cette variante, l'arête latérale 75 du disque présente une forme sensiblement identique à celle de l'arête 75 du disque de la figure 11 mais présente vers le bas une partie concave qui remonte en direction du plan vertical 74. Cette disposition est mieux représentée sur la figure 13B qui représente une coupe du disque de la figure 13A selon un plan perpendiculaire à l'arête 72, à proximité de la périphérie du disque. Ainsi qu'on peut le constater sur cette figure 13B, l'arête 75 présente un pic 77. Le trajet du liquide représenté par les flèches en pointillé sur la figure est donc dévié, une telle disposition soumet le liquide à un effet connu sous la dénomination anglo-saxonne «spoiler» qui permet encore de mieux atténuer le bruit au moment de l'ouverture ou de la fermeture du robinet.

La figure 14 représente un disque selon l'invention muni d'une seule ouverture à 180°, disque utilisable par conséquent dans des robinets où la «queue de manœuvre» dudit robinet fait un angle de 180° entre les deux positions d'ouverture et de fermeture. Ce disque a été représenté selon la variante de réalisation de l'invention dans laquelle ledit disque est entouré d'un manchon circulaire. Sur cette figure, les mêmes éléments que ceux des figures précédentes portent les mêmes références. Le disque tel que représenté sur cette figure comporte une face plane 70 et une face non plane 20 constituée d'une partie curviligne 92 et d'une partie plane 90 qui se coupent suivant l'arête 21. Tel qu'il est représenté sur cette figure, le liquide doit être amené par le haut comme dans le cas des figures précédentes. La surface curviligne 92 coupe la face plane inférieure du disque suivant l'arête 94 qui définit avec la paroi correspondante du manchon 79 le secteur, ou ouverture, 93 constitué sensiblement par un demi cercle. Il est bien entendu que pour ce type de disque avec un secteur à 180° ainsi d'ailleurs que pour des disques à 3 secteurs tels que représentés sur la figure 10, toutes les variantes illustrées sur les figures 11, 12 et 13 ainsi que sur les figures 5, 6, 7, 8 et 9, peuvent également s'appliquer.

D'une manière générale, tous les disques tels que décrits ci-dessus, quelle que soit la forme des surfaces qui constituent la face non plane du disque et qui permettent d'atténuer les phénomènes phoniques à l'ouverture et à la fermeture du robinet par rapport à un disque correspondant muni d'ouvertures à parois perpendiculaires à ladite face plane, sont compris dans le cadre de la présente invention, dans la mesure où cette amélioration phonique se produit pour des débits ou des pressions usuels en particulier dans le cadre de la robinetterie destinée à la distribution de l'eau. En règle générale, ceci s'applique aux débits inférieurs à 50 l/mn et de préférence inférieurs à 25 l/mn.

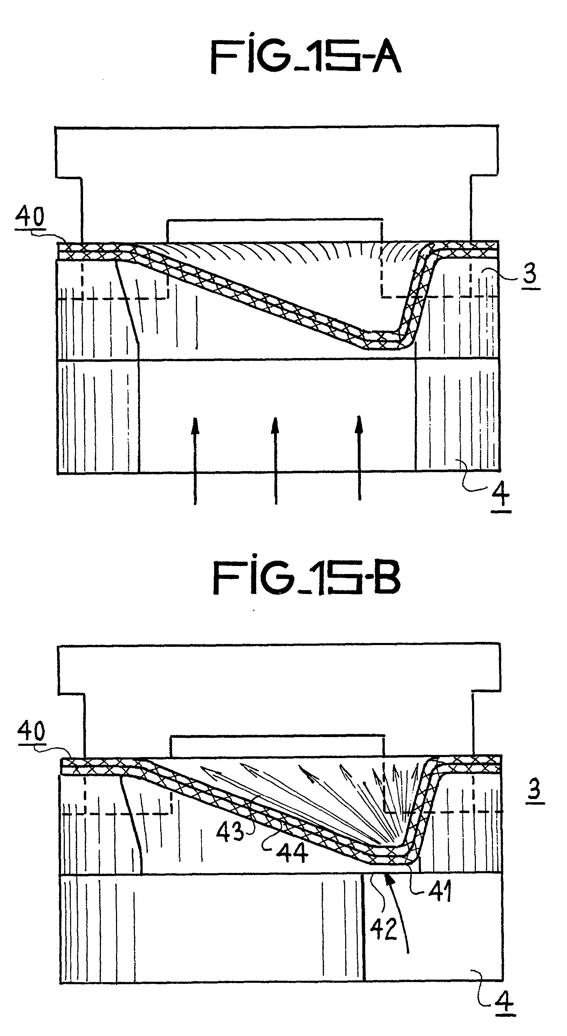

La figure 15 représente, suivant deux vues A et B, une disposition supplémentaire du robinet selon l'invention, située cette fois sur la face sortie du disque mobile 3, à savoir un grillage 40. La caractéristique de ce grillage, qui est habituellement en forme de disque plan dans les réalisations connues, est d'être mis sous la forme d'une paire de cônes, chaque cône ayant son axe incliné dans la direction d'une des faces radiales d'une des deux ouvertures en forme de secteur.

Le fonctionnement d'un tel cône grillagé est le suivant, illustré par deux vues prises par rapport au disque mobile pour une meilleure compréhension.

Aux grandes ouvertures, (figure 15A), le disque mobile 3 a son ouverture en coïncidence avec le disque fixe 4. L'eau traverse sans rencontrer d'étranglement, et le grillage 40 est traversé dans son ensemble sans jouer aucun rôle; de plus, dans le cas où le disque mobile a la forme «papillon» de la figure 3, une partie de l'eau passe latéralement par les ouvertures du disque mobile.

En revanche, aux petites ouvertures (figure 15B), le passage laissé à l'eau en 42 est réduit, et des phénomènes tourbillonnaires résiduels peuvent se produire. Le cône grillagé présente alors son sommet 41, à proximité immédiate de l'ouverture étroite 42, et le jet fluide est alors guidé à sa sortie, de façon régulière et continue, suivant les flèches telles que 43, le reste du cône grillagé 44 se comportant comme un cône d'expansion anti-tourbillonnaire.

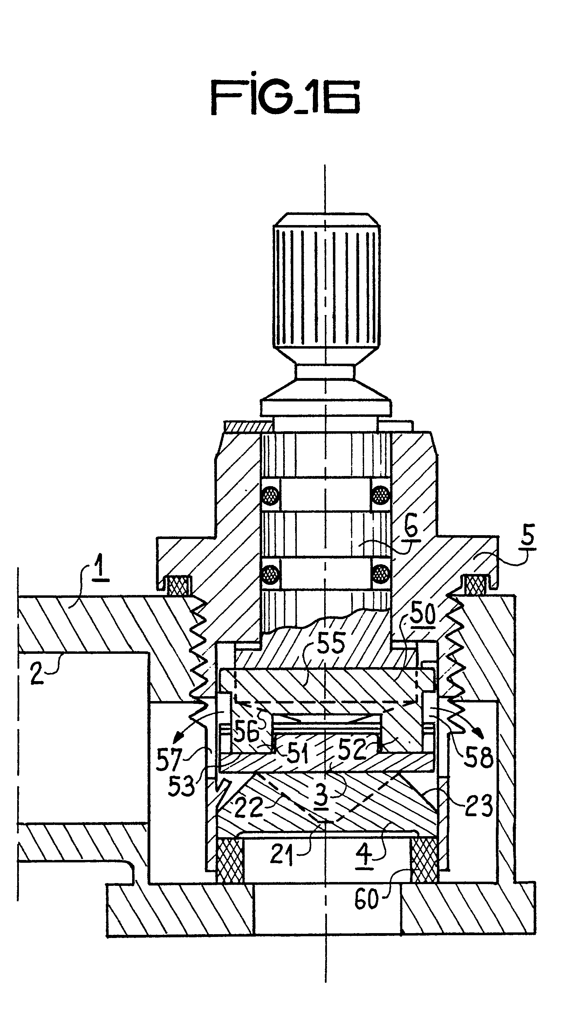

La figure 16 représente l'ensemble du robinet à faible émission sonore selon l'invention, les mêmes éléments y portant les mêmes références. Il comporte une autre disposition supplémentaire pour réduire le risque de création de tourbillons à la sortie du jet fluide. Pour cela, la tige 6 de commande n'est plus reliée mécaniquement au disque mobile 3, comme représenté sur la figure 1 de l'art connu.

La commande du disque est faite par une pièce intermédiaire 50, affectant la forme générale de la lettre U, dont les branches 51 et 52 pénètrent dans des logements 53 et 54 du disque, et la partie médiane 55 dans une fente portée par l'extrémité libre de la tige de commande. Dans ces conditions, la face en bout 56 de la tige peut être, selon l'invention, aisément mise en forme de déflecteur de révolution pour l'eau, améliorant son guidage vers les ouvertures latérales 57 et 58 du support 5. La forme peut être soit un cône à grand angle au sommet, soit, de préférence, une calotte sphérique.

La pièce intermédiaire de commande peut être de préférence réalisée en acier inoxydable, et peut, de plus, assumer le rôle, par une de ses extrémités transversales, de butée «quart de tour», limitant l'angle de rotation de la «queue de manœuvre» à la valeur voulue.

On doit remarquer que, dans ce qui précède, le robinet de l'invention a été décrit, à titre d'exemple, dans le cas du quart de tour, avec deux ouvertures en secteurs.

Les variantes de réalisation du disque, représentées sur les figures 7 à 13, ont été illustrées en une seule partie. Il est bien entendu que ces disques peuvent être également réalisés en deux parties, avec ou sans manchon comme cela est indiqué sur les figures 5 et 6.

On doit remarquer également que sur les figures 15A et 15B, le robinet selon l'invention a été décrit pour plus de simplicité avec un seul grillage en forme de cône. Il est bien entendu que l'on peut aisément superposer plusieurs grillages de même pas ou de pas différents, de mailles décalées les unes par rapport aux autres ou non, sans pour autant sortir du cadre de l'invention.

Il faut également remarquer que dans le mode de réalisation décrit, la force d'appui élastique des deux disques l'un sur l'autre ne pouvant être exercé par la pièce en forme de fer à cheval, c'est sur les disques qu'est exercée cette force, par le joint annulaire 60 qui assure l'étanchéité entre le corps du robinet et le support du disque. Cette disposition fait ainsi assumer, avantageusement, deux fonctions au joint, le disque fixe étant monté coulissant. Il est d'autre part à observer, que bien que dans la description, le grillage utilisé ait une forme de cône, on peut également utiliser un grillage dans lequel le cône est partiellement coupé suivant les surfaces latérales du disque, conférant ainsi audit grillage la forme de deux plans inclinés de pentes inégales. Le robinet selon l'invention décrit en particulier à l'aide de la figure 16 mentionne que le disque 3 est mobile, tandis que le disque 4 est fixe. Il est bien entendu que l'inverse peut également être réalisé, le disque 4 étant mobile, le disque 3 étant fixe. Pour cela, il suffit que la tige de commande 6 ait une forme adaptée, par exemple qu'elle ait une extrémité en forme de pince dont les dents viennent se fixer sur le disque 4, la tige de commande s'appuyant sur le disque 3 et le maintenant en position fixe, par tout moyen adapté.

Il est enfin à remarquer que, par rapport à des robinets «quart de tour» réalisés suivant la structure connue de la figure 1, le robinet réalisé selon la figure 16 a permis d'obtenir, pour des débits de valeur comparable, une amélioration dans la réduction du bruit de l'ordre de 5 à 10 décibels.

## Revendications

1. Disque fixe (4) pour robinet à deux disques superposés réglant le débit et à faible émission sonore, en particulier pendant l'action d'ouverture et de fermeture, ledit disque fixe (4) étant percé d'au moins une ouverture en secteur (24) et présentant une face d'entrée pour le liquide, le disque fixe (4) comportant une face de sortie plane (70) au contact d'une face d'entrée plane correspondante d'un second disque tournant (3) percé d'au moins une ouverture en secteur (24), les deux disques (3, 4) définissant par leur position angulaire relative le débit du liquide, caractérisé en ce que la face d'entrée du disque fixe (4) comporte au moins une surface d'arête ou portion de surface d'arête s'étendant selon un diamètre, respectivement selon au moins trois rayons du disque fixe (4) et comporte au moins une surface latérale inclinée s'étendant de la surface d'arête ou portion de surface d'arête jusqu'à la face de sortie plane (70) du disque fixe (4), délimitant au moins partiellement l'une au moins des ouvertures dudit disque fixe (4), en ce que ladite surface latérale inclinée est de forme concave ou convexe, de sorte qu'un régime d'écoulement sensiblement laminaire du liquide est maintenu, quel que soit le degré d'obturation desdites ouvertures, et en ce que chaque ouverture en secteur (24) a son axe de symétrie contenu dans un plan perpendiculaire audit diamètre, respectivement dans un plan bisecteur desdits rayons.

2. Disque fixe (4) selon la revendication 1, comportant une seule ouverture en secteur à 180°, caractérisé en ce que la surface latérale inclinée de forme concave ou convexe est remplacée par une surface latérale inclinée qui est plane.

3. Disque fixe (4) pour robinet à deux disques superposés réglant le débit et à faible émission sonore, en particulier pendant l'action d'ouverture et de fermeture, le disque fixe (4) étant percé d'au moins une ouverture en secteur (24) et présentant une face d'entrée pour le liquide, le disque fixe (4) comportant une face de sortie plane (70) au contact d'une face d'entrée plane correspondante d'un second disque tournant (3) percé d'au moins une ouverture en secteur (24), les deux disques (3, 4) définissant par leur position angulaire relative le débit du liquide, caractérisé en ce que le disque fixe (4) est réalisé en deux parties (61, 64), une première partie (61) ayant la forme d'un disque plat en céramique dont une face de sortie (70) est au contact de la face d'entrée plane correspondante du disque tournant (3) et une seconde partie (64) en matériau moulé, les deux parties (61, 64) étant assemblées à l'aide d'un adhésif, la face d'entrée de la seconde partie (64) du disque fixe (4) comportant au moins une arête, surface d'arête ou portion de surface d'arête s'étendant selon un diamètre, respectivement selon au moins trois rayons du disque fixe (4) et comportant au moins une surface latérale inclinée s'étendant de l'arête, surface d'arête ou portion de surface d'arête jusqu'à la face de sortie plane (70) du disque fixe (4), délimitant au moins partiellement l'une au moins des ouvertures dudit disque fixe (4), et en ce que chaque ouverture en secteur (24) a son axe de symétrie contenu dans un plan perpendiculaire audit diamètre, respectivement dans un plan bisecteur desdits rayons.

4. Disque fixe selon l'une des revendications 1 à 3, caractérisé en ce que la surface latérale inclinée comporte une partie convexe à partir de l'arête et une partie concave à partir de la face plane dudit disque fixe (4) ou vice-versa.

5. Disque fixe selon l'une des revendications 1 à 4, caractérisé en ce que l'arête, la surface d'arête ou la portion de surface d'arête est plane.

6. Disque fixe selon l'une des revendications 2 à 5, comportant une seule ouverture en secteur à 180°, caractérisé en ce que la surface ou portion de surface d'arête est plane et parallèle à la face de sortie plane (70) du disque fixe (4) au contact du disque mobile.

7. Disque fixe selon l'une des revendications 1 à 6, caractérisé en ce que la face opposée (20) à la face de sortie plane (70) du disque fixe comporte au moins une partie convexe au voisinage de l'axe du disque perpendiculaire à sa face plane.

8. Disque fixe selon l'une des revendications 1 à 7, caractérisé en ce que chaque ouverture (24) du disque fixe comporte un plan de symétrie.

9. Disque fixe selon l'une des revendications 1 à 8, caractérisé en ce que le disque fixe est entouré, sur sa surface latérale, d'un manchon cylindrique (30), de hauteur au moins égale à celle du disque, ce manchon étant constitué du même matériau que le disque, et d'un seul tenant avec lui.

10. Disque fixe selon l'une des revendications 1 à 9, caractérisé en ce que le disque fixe et/ou le manchon qui l'entoure sont constitués ou revêtus d'un matériau plastique.

11. Disque fixe selon l'une des revendications 3 à 10, caractérisé en ce que les deux parties (61, 64) du disque fixe (4) se raccordent suivant un plan (69) sensiblement parallèle à la face plane (70).

12. Disque fixe selon l'une des revendications 3 à 11, caractérisé en ce que le matériau plastique ou moulable de la partie supérieure du disque fixe est souple.

13. Disque fixe selon l'une des revendications 1 à 12, caractérisé en ce qu'il est partiellement ou complètement constitué d'un matériau élastique et assure également la fonction de joint élastique annulaire appuyant les deux disques l'un sur l'autre.

14. Disque fixe selon l'une des revendications 1 à 13, caractérisé en ce que son arête latérale (75) présente vers le bas une partie concave qui remonte en direction du plan vertical (74) délimitant une face de chaque ouverture en secteur.

15. Disque fixe selon l'une des revendications 1 à 14, caractérisé en ce que, vue en coupe dans un plan perpendiculaire à sa face de sortie plane (70), il a le profil d'une gorge (63, 64) dont une extrémité (65, 67) est plus basse que l'autre (66, 68).

16. Robinet à liquide à faible émission sonore qui comporte un corps (1) cylindrique avec un tube de sortie (2) pour l'évacuation du liquide, un support intérieur cylindrique (5) pour recevoir un premier disque fixe (4) présentant une face d'entrée pour le liquide, et une tige de commande (6) assurant la rotation d'un second disque tournant (3) percé d'au moins une ouverture en secteur (24), les deux disques (3, 4) étant appliqués l'un sur l'autre, en définissant par leur position angulaire relative le débit du liquide, le disque fixe (4) comportant une face plane (70) au contact de la face plane correspondante du disque tournant (3), caractérisé en ce que le disque fixe (4) est conforme à l'une des revendications 1 à 15.

17. Robinet selon la revendication 16, caractérisé en ce que la face de sortie du disque tournant (3) porte au moins un grillage (40), chaque ouverture de ce disque étant pénétrée par une partie de ce grillage et mis sensiblement en forme de cône, l'axe de chaque cône étant orienté vers celui des bords de l'ouverture du second disque qui correspond à la fermeture totale du passage de l'eau.

18. Robinet selon la revendication 16, caractérisé en ce que la face de sortie du disque tournant (3) porte au moins un grillage (40), chaque ouverture étant pénétrée par une partie de ce grillage mis en forme de deux plans inclinés de pentes inégales, le plan de plus grande pente étant orienté vers celui des bords d'ouverture qui correspond à la fermeture totale du passage de l'eau.

19. Robinet selon l'une des revendications 16 à 18, caractérisé en ce qu'il comporte une pluralité de grillages superposés de pas différents.

20. Robinet selon l'une des revendications 16 à 19, caractérisé en ce que la force qui applique les deux disques l'un sur l'autre est produite par un joint élastique annulaire (60) assurant l'étanchéité entre le corps du robinet et le support du premier disque (4).

**Claims**

1. Fixed disk (4) for a tap with two superposed disks adjusting the flowrate and generating little noise, especially during opening and closing, said fixed disk (4) having at least one sector-shaped hole (24) through it and a liquid inlet surface, the fixed disk (4) comprising a plane outlet surface (70) In contact with a corresponding plane inlet surface of a rotary, second disk (3) through which is at least one sector-shaped hole (24), the two disks (3, 4) defining by virtue of their relative angular position the flowrate of the liquid, characterized in that the inlet surface of the fixed disk (4) comprises at least one edge surface or portion of edge surface extending along a diameter, respectively along at least three radii of the fixed disk (4) and comprises at least one inclined lateral surface extending from the edge surface or portion of edge surface to the plane outlet surface (70) of the fixed disk (4), delimiting at least partially at least one of the holes in said fixed disk (4), in that said inclined lateral surface is concave or convex, so that a substantially laminar flow of liquid is maintained, irrespective of the degree to which said holes ase covered, and in that each sector-shaped hole (24) has its axis of symmetry in a plane perpendicular to said diameter, respectively in a plane bisecting said radii.

2. Fixed disk (4) according to claim 1, comprising a single 180° sector-shaped hole, characterized in that the concave or convex inclined lateral surface is replaced by a plane inclined lateral surface.

3. Fixed disk (4) for a tap with two superposed disks adjusting the flowrate and generating little noise, especially during opening and closing, the fixed disk (4) having at least one sector-shaped hole (24) through it and a liquid inlet surface, the fixed disk (4) comprising a plane outlet surface (70) in contact with a corresponding plane inlet surface of a rotary, second disk (3) through which is at least one sector-shaped hole (24), the two disks (3, 4) defining by virtue of their relative angular position the flowrate of the liquid, characterized in that the fixed disk (4) is in two parts (61, 64), a first part (61) in the form of a flat ceramic disk an outlet surface (70) of which is in contact with the corresponding plane inlet surface of the rotary disk (3) and a second part (64) of moulded material, the two parts (61, 64) being fastened together by means of an adhesive, the inlet surface of the second part (64) of the fixed disk (4) comprising at least one edge, edge surface or portion of edge surface extending along a diameter, respectively at least three radii of the fixed disk (4) and comprising at least one inclined lateral surface extending from the edge, edge surface or portion of edge surface to the plane outlet surface (70) of the fixed disk (4), delimiting at least partially at least one of the holes in said fixed disk (4), and in that each sector-shaped hole (24) has its axis of symmetry in a plane perpendicular to said diameter, respectively in a plane bisecting said radii.

4. Fixed disk according to any one of claims 1 to 3, characterized in that the inclined lateral surface comprises a convex part beginning at the edge and a concave part beginning at the plane surface of said fixed disk (4) or vice versa.

5. Fixed disk according to any one of claims 1 to 4, characterized in that the edge, the edge surface or the portion of edge surface is plane.

6. Fixed disk according to any one of claims 2 to 5, comprising a single 180° sector-shaped hole, characterized in that the surface or portion of edge surface is plane and parallel to the plane outlet surface (70) of the fixed disk (4) in contact with the movable disk.

7. Fixed disk according to any one of claims 1 to 6, characterized in that the surface (20) opposite the plane outlet surface (70) of the fixed disk comprises at least one convex part in the vicinity of the axis of the disk perpendicular to its plane surface.

8. Fixed disk according to any one of claims 1 to 7, characterized in that each hole (24) in the fixed disk has a plane of symmetry.

9. Fixed disk according to any one of claims 1 to 8, characterized in that the fixed disk is surrounded, over its lateral surface, by a cylindrical sleeve (30) the height of which is at least equal to that of the disk, this sleeve consisting of the same material as the disk and being in one piece with it.

10. Fixed disk according to any one of claims 1 to 9, characterized in that the fixed disk and/or the sleeve that surrounds it consist of or are covered with a plastics material.

11. Fixed disk according to any one of claims 3 to 10, characterized in that the two parts (61, 64) of the fixed disk (4) merge in a plane (69) substantially parallel to the plane surface (70).

12. Fixed disk according to any one of claims 3 to 11, characterized in that the plastics or mouldable material of the upper part of the fixed disk is flexible.

13. Fixed disk according to any one of claims 1 to 12, characterized in that it consists wholly or partially of an elastic material and also serves as an annular resilient seal pressing the two disks together.

14. Fixed disk according to any one of claims 1 to 13, characterized in that its lateral edge (75) features towards the bottom a concave part which rises towards the vertical plane (74) delimiting one surface of each sector-shaped hole.

15. Fixed disk according to any one of claims 1 to 14, characterized in that as seen in cross-section in a plane perpendicular to its plane outlet surface (70), it has the profile of a groove (63, 64) of which one end (65, 67) is lower than the other (66, 68).

16. Low-noise tap for liquids comprising a cylindrical body (1) with an outlet tube (2) for evacuation of the liquid, a cylindrical inner support (5) for receiving a first fixed disk (4) having an inlet surface for the liquid, and a control rod (6) rotating a rotary, second disk (3) through which there is at least one sector-shaped hole (24), the two disks (3, 4) being pressed together and defining by their relative angular position the flowrate of the liquid, the fixed disk (4) comprising a plane surface (70) in contact with the corresponding plane surface of the rotary disk (3), characterized in that the fixed disk (4) is as claimed in any one of claims 1 to 15.

17. Tap according to claim 16, characterized in that the outlet surface of the rotary disk (3) carries at least one grille (40), each hole in this disk being penetrated by a part of this grille and of substantially cone shape, the axis of each cone being oriented towards that of the edges of the hole in the second disk which corresponds to total closure of the water passage.

18. Tap according to claim 16, characterized in that the outlet surface of the rotary disk (3) carries at least one grille (40), each hole being penetrated by a part of this grille in the shape of two inclined planes of different inclination, the plane of greater inclination being oriented towards that of the edges of the hole which corresponds to total closure of the water passage.

19. Tap according to any one of claims 16 to 18, characterized in that it comprises a plurality of superposed grilles of different mesh size.

20. Tap according to any one of claims 16 to 19, characterized in that the force which urges the two disks together is produced by an annular resilient seal (60) providing a seal between the body of the tap and the support of the first disk (4).

**Patentansprüche**

1. Feste Scheibe (4) für ein Ventil mit zwei aufeinandergelegten Scheiben zur Durchsatzregelung und mit geringer Schallabgabe insbesondere während der Öffnungs- und Schliessbetätigung, wobei die feste Scheibe (4) durch mindestens eine Sektor-Öffnung (24) durchbrochen ist und eine Eintrittsfläche für die Flüssigkeit aufweist, die feststehende Scheibe (4) eine ebene Austrittsfläche (70) in Berührung mit einer entsprechenden ebenen Eintrittsfläche einer zweiten sich drehenden Scheibe (3) besitzt, die durch mindestens eine Sektor-Öffnung (24) durchbrochen ist, und die beiden Scheiben (3, 4) durch ihre relative Winkelstellung den Flüssigkeitsdurchsatz bestimmen, dadurch gekennzeichnet, dass die Eintrittsfläche der festen Scheibe (4) mindestens eine Kantenfläche oder Abschnitt der Kantenfläche aufweist, die bzw. der sich längs eines Durchmessers bzw. längs mindestens dreier Radien der feststehenden Scheibe (4) erstreckt bzw. erstrecken, und mindestens eine geneigte Seitenfläche, die sich von der Kantenfläche oder Abschnitt der Kantenfläche bis zur ebenen Austrittsfläche (70) der festen Scheibe (4) erstreckt, wobei sie mindestens teilweise mindestens eine der Öffnungen der festen Scheibe (4) begrenzt, dass diese geneigte Seitenfläche von konkaver oder konvexer Form ist, derart, dass ein Bereich im wesentlichen laminarer Strömung der Flüssigkeit aufrechterhalten ist, unabhängig von dem Schliessgrad der Öffnungen, und dass jede Sektor-Öffnung (24) eine Symmetrieachse besitzt, die in einer senkrecht zu dem Durchmesser stehenden Ebene bzw. in einer Mittenebene zwischen den Radien enthalten ist.

2. Feste Scheibe nach Anspruch 1, die eine einzige Sektor-Öffnung mit 180° besitzt, dadurch gekennzeichnet, dass die geneigte Seitenfläche konkaver oder konvexer Form ersetzt ist durch eine ebene geneigte Seitenfläche.

3. Feste Scheibe (4) für ein Ventil mit zwei aufeinandergelegten Scheiben zur Durchsatzregelung und mit geringer Schallabgabe insbesondere während der Öffnungs- und Schliessbetätigung, wobei die feste Scheibe (4) durch mindestens eine Sektor-Öffnung (24) durchbrochen ist und eine Eintrittsfläche für die Flüssigkeit aufweist, die feststehende Scheibe (4) eine ebene Austrittsfläche (70) in Berührung mit einer entsprechenden ebenen Eintrittsfläche einer zweiten sich drehenden Scheibe (3) besitzt, die durch mindestens eine Sektor-Öffnung (24) durchbrochen ist, und die beiden Scheiben (3, 4) durch ihre relative Winkelstellung den Flüssigkeitsdurchsatz bestimmen, dadurch gekennzeichnet, dass die feste Scheibe (4) in zwei Abschnitten (61, 64) ausgeführt ist, einem ersten Abschnitt (61), der die Form einer flachen Keramikscheibe besitzt, deren Austrittsfläche (70) mit der entsprechenden ebenen Eintrittsfläche der sich drehenden Scheibe (3) in Berührung ist, und einem zweiten Abschnitt (64) aus Gussmaterial, wobei die beiden Abschnitte (61, 64) mit Hilfe eines Klebers zusammengefügt sind, die Eintrittsfläche des zweiten Abschnittes (64) der festen Scheibe (4) mindestens eine Kante, Kantenfläche oder Kantenflächenabschnitt besitzt, der oder die sich längs eines Durchmessers bzw. längs mindestens dreier Radien der festen Scheibe (4) erstreckt bzw. erstrecken und mindestens eine geneigte Seitenfläche aufweist, die sich von der Kante, der Kantenfläche oder dem Abschnitt der Kantenfläche bis zu der ebenen Austrittsfläche (70) der festen Scheibe (4) erstreckt, und mindestens teilweise mindestens eine der Öffnungen der festen Scheibe (4) begrenzt, und dass jede Sektor-Öffnung (24) eine Symmetrieachse besitzt, die in einer zu dem Durchmesser senkrechten Ebene bzw. einer Mittenebene der Radien liegt.

4. Feste Scheibe nach einem der Ansprüche 1 bis 3, dadurch gekennzeichnet, dass die geneigte Seitenfläche einen konvexen Abschnitt von der Kante her und einen konkaven Abschnitt von der ebenen Fläche der festen Scheibe (4) her besitzt, oder umgekehrt.

5. Feste Scheibe nach einem der Ansprüche 1 bis 4, dadurch gekennzeichnet, dass die Kante, die Kantenfläche oder der Abschnitt der Kantenfläche eben ist.

6. Feste Scheibe nach einem der Ansprüche 2 bis 5, die eine einzige Sektoröffnung mit 180° aufweist, dadurch gekennzeichnet, dass die Kantenfläche oder der Abschnitt der Kantenfläche eben und zu der mit der beweglichen Scheibe in Berührung stehenden ebenen Austrittsfläche (70) der feststehenden Scheibe (4) parallel ist.

7. Feste Scheibe nach einem der Ansprüche 1 bis 6, dadurch gekennzeichnet, dass die der ebenen Austrittsfläche (70) der festen Scheibe gegenüberliegenden Fläche (20) mindestens einen konvexen Abschnitt in Nachbarschaft zu der senkrecht zu ihrer ebenen Fläche stehenden Achse der Scheibe aufweist.

8. Feste Scheibe nach einem der Ansprüche 1 bis 7, dadurch gekennzeichnet, dass jede Öffnung (24) der festen Scheibe eine Symmetrieebene besitzt.

9. Feste Scheibe nach einem der Ansprüche 1 bis 8, dadurch gekennzeichnet, dass die feste Scheibe an der Seitenfläche von einem zylindrischen Mantel (30) umgeben ist, dessen Höhe mindestens der der Scheibe gleich ist, wobei der Mantel aus dem gleichen Material wie die Scheibe und mit ihr einstückig ausgebildet ist.

10. Feste Scheibe nach einem der Ansprüche 1 bis 9, dadurch gekennzeichnet, dass die feste Scheibe und/oder der sie umgebende Mantel aus einem Kunststoffmaterial gebildet oder mit ihm umkleidet ist bzw. sind.

11. Feste Scheibe nach einem der Ansprüche 3 bis 10, dadurch gekennzeichnet, dass die beiden Abschnitte (61, 64) der feststehenden Scheibe (4) sich längs einer im wesentlichen zur ebenen Fläche (70) parallelen Ebene (69) zusammenfügen.

12. Feste Scheibe nach einem der Ansprüche 3 bis 11, dadurch gekennzeichnet, dass das Kunststoff- oder Gussmaterial des oberen Abschnittes der festen Scheibe nachgiebig ist.

13. Feste Scheibe nach einem der Ansprüche 1 bis 12, dadurch gekennzeichnet, dass die teilweise oder vollständig aus einem elastischen Material gebildet ist und gleichzeitig die Funktion einer elastischen Ringverbindung sicherstellt, welche die beiden Scheiben aneinander abstützt.

14. Feste Scheibe nach einem der Ansprüche 1 bis 13, dadurch gekennzeichnet, dass ihre Seitenkante (75) nach unten einen konkaven Abschnitt aufweist, der in Richtung zu der eine Fläche jeder Sektor-Öffnung begrenzenden Vertikalebene (74) hin ansteigt.

15. Feste Scheibe nach einem der Ansprüche 1 bis 14, dadurch gekennzeichnet, dass sie, in einem Schnitt längs einer zu ihrer Austrittsfläche (70) senkrechten Ebene gesehen, ein Kehl-Profil (63, 64) besitzt, dessen eines Ende (65, 67) niedriger als das andere (66, 68) liegt.

16. Flüssigkeitsventil mit geringer Schallabgabe, das ein zylindrisches Gehäuse (1) mit einem Austrittsrohr (2) zur Abgabe der Flüssigkeit aufweist, eine innere zylindrische Abstützung (5) zur Aufnahme einer ersten festen Scheibe (4), die eine Eintrittsfläche für die Flüssigkeit zeigt, und eine Steuerwelle (6), welche die Drehung einer zweiten sich drehenden Scheibe (3) sicherstellt, die durch mindestens eine Sektor-Öffnung (24) durchbrochen ist, wobei die beiden Scheiben (3, 4) aufeinander gelegt sind, um durch ihre relative Winkellage den Flüssigkeitsdurchlass zu bestimmen, wobei die feste Scheibe (4) eine ebene Fläche (70) in Berührung mit einer entsprechenden ebenen Fläche der sich drehenden Scheibe (3) aufweist, dadurch gekennzeichnet, dass die feste Scheibe (4) nach einem der Ansprüche 1 bis 15 ausgebildet ist.

17. Ventil nach Anspruch 16, dadurch gekennzeichnet, dass die Austrittsfläche der sich drehenden Scheibe mindestens ein Gitter (40) besitzt, dass jede Öffnung der Scheibe durch einen im wesentlichen in Kegelform eingesetzten Abschnitt des Gitters durchdrungen wird, wobei die Achse jedes Kegels gegen die Wand der Öffnung der zweiten Scheibe hin gerichtet ist, die der vollständigen Schliessung des Wasserdurchlasses entspricht.

18. Ventil nach Anspruch 16, dadurch gekennzeichnet, dass die Austrittsfläche der sich drehenden Scheibe (3) mindestens ein Gitter (40) trägt, dass jede Öffnung durch einen Abschnitt des Gitters durchdrungen wird, der in Form von zwei mit ungleicher Steigung versehenen Ebenen gebildet ist, wobei die Ebene mit grösserer Steigung gegen die Wand der Öffnung gerichtet ist, die der vollständigen Schliessung des Wasserdurchlasses entspricht.

19. Ventil nach einem der Ansprüche 16 bis 18, dadurch gekennzeichnet, dass es eine Vielzahl von übereinandergesetzten Gittern mit unterschiedlicher Maschenweite aufweist.

20. Ventil nach einem der Ansprüche 16 bis 19, dadurch gekennzeichnet, dass die Kraft, die die beiden Scheiben gegeneinander andrückt, durch eine elastische Ringverbindung (60) erzeugt ist, welche die Dichtheit zwischen dem Ventilgehäuse und die Abstützung der ersten Scheibe (4) sicherstellt.

# FIG_1

# FIG_2

# FIG_3

# FIG_4

# FIG_5

# FIG_6

0 055 181

# FIG_7

# FIG_8

# FIG_9

17

## FIG_10

## FIG_11

## FIG_12

0 055 181

# FIG_13-a

# FIG_13-b

# FIG_14

# FIG_15-A

# FIG_15-B

# FIG_16